Europäisches Patentamt

European Patent Office

Office européen des brevets

(11) Publication number: **0 207 804 B1**

# EUROPEAN PATENT SPECIFICATION

(45) Date of publication of patent specification: **08.01.92**

(51) Int. Cl.⁵: **C02F  9/00, C02F 5/00,**
**F24F 6/00, F22B 1/28,**
**F22B 1/30**

(21) Application number: **86305195.9**

(22) Date of filing: **04.07.86**

(54) **The management of water in recirculatory water systems.**

(30) Priority: **04.07.85 GB 8516946**

(43) Date of publication of application:
**07.01.87 Bulletin  87/02**

(45) Publication of the grant of the patent:
**08.01.92 Bulletin  92/02**

(84) Designated Contracting States:
**BE DE FR IT NL**

(56) References cited:
**EP-A- 0 069 155          WO-A-82/03133**
**DE-A- 2 922 735          FR-A- 982 960**
**GB-A- 324 843             GB-A- 2 120 763**
**US-A- 3 126 427          US-A- 3 196 892**
**US-A- 3 292 650          US-A- 3 680 531**
**US-A- 4 070 992**

(73) Proprietor: **S.D.I. WATER TECHNOLOGY LIMIT-**
**ED**
**Powke Lane Industrial Estate**
**Blackheath West Midlands B65 0AH(GB)**

(72) Inventor: **Fredericks, Stuart Markham**
**Great Shortwood Farm House Brockhill Lane**
**Brockhill Redditch(GB)**

(74) Representative: **Stonehouse, Sidney William**
**et al**
**Barker, Brettell & Duncan 138 Hagley Road**
**Edgbaston**
**Birmingham B16 9PW(GB)**

EP 0 207 804 B1

## Description

This invention relates to the management of water in recirculatory water systems and more particularly in recirculatory water systems of the kind (hereinafter referred to as the kind specified) such that in use water is lost from the system in the form of water vapour. Typical systems of that kind are evaporative cooling systems and humidifiers. When such a system is in use, water lost as water vapour is generally replaced with water from the water mains or from some other suitable source, and this added water generally contains in solution small concentrations of substances such as salts. As the water that is lost as water vapour carries little or no dissolved material with it, the concentration of dissolved substances in the system therefore tends gradually to increase. In order to prevent an excessive build-up of dissolved material in the system it is often the practice to remove from time to time a quantity of water from the system and to replace this with water drawn from the usual source. That removal of water from the system is referred to as blow-down. It has also been found necessary or at least desirable to introduce into the water in the system one or more additives. Typical additives are biocides, anti-corrosion materials and anti-scaling materials. The introduction of such additives is usually effected periodically to replace the additives withdrawn during blow-down and additives that may become ineffective or may leave the system in some other manner.

Hitherto it has been the usual practice in a recirculatory water system to provide a device for effecting blow-down and a device for the introduction of additives, those devices being disposed at different locations in the system and communicating with water circulating in the system. The piecemeal installation of such devices and their upkeep and control have often proved unsatisfactory and an aim of the present invention is to provide an improved arrangement. DE-A-2 922 735 discloses that kind of system.

From a first aspect the present invention consists in a transportable water-treatment unit for use with a recirculatory water system of the kind such that in use water is lost from the system in the form of water vapour, and comprising water ducting, dosing means operative to add to water in the system controlled amounts of material in the form of one or more additives, and withdrawal means operative to bring about the removal of water from the system, characterised in that the ducting extends between an inlet and an outlet for connection to spaced locations of the system so that the ducting affords a pathway or pathways for only part of the water flowing from one of said locations to the other, the dosing means is operative to add said material to water in the ducting between the inlet and the outlet, the withdrawal means is operative to bring about the removal of water from the ducting between the inlet and the outlet and constitutes part of blow-down means which also includes monitoring means operative to monitor flowing through the ducting between the inlet and the outlet and operative to bring about operation of the withdrawal means when it detects that the concentration of substances dissolved in the water in the ducting exceeds a predetermined value.

From a second aspect the invention consists in a recirculatory water system of the kind specified in combination with a transportable water-treatment unit in accordance with the first aspect of the present invention, the inlet and outlet of the ducting being connected to spaced locations of the system for the purpose specified.

In use the ducting therefore acts as a form of bypass through which flows only a part of the water circulating in the system from one location to the other. The invention takes advantage of the fact that neither the dosing means nor the blow-down means need be disposed at a location in the system past which all the water flows. As far as the dosing means is concerned, material added to the water gradually becomes dispersed uniformly through the totality of water in the system, so that it is immaterial where the addition of material actually occurs. Likewise it is immaterial from what location in the system water is withdrawn during blow-down.

A great advantage of the present invention, therefore, is that it enables means for effecting both dosing and blow-down to be coupled to a system with relatively little disturbance to the system, in that it is only necessary for the inlet and outlet of the ducting to be connected to spaced locations in the system. This is in marked contrast to the previous practice, which normally required dosing to be effected at one or more locations, monitoring at another location, and withdrawal at yet another location.

In a water-treatment unit in accordance with the present invention the monitoring means is preferably upstream of a withdrawal point in the ducting from which water is removed during operation of the withdrawal means. With that arrangement, that part of the water which, when monitored, gives rise to blow-down is likely to be moved on from the monitoring means during blow-down so that when the monitoring means is next brought into operation it monitors water newly introduced to the monitoring means. Preferably there is a non-return valve in the ducting downstream of the withdrawal point so that the removal of water from the ducting during blow-down cannot cause reversal of flow in that part of the ducting downstream of the withdrawal point.

The dosing means is preferably operative to add material to the water in the ducting downstream of the monitoring means so that the added material, when first added, does not affect the monitoring means. Furthermore the dosing means is preferably operative to add material to the water in the ducting downstream of the withdrawal means so that newly added material is not withdrawn. Moreover there is preferably a non-return valve between the withdrawal means and the location or locations where the material is added by the dosing means, so as to prevent any tendency there might otherwise be for water to which the material was newly added to flow in the reverse direction to the withdrawal means and to be removed from the system. The same non-return valve may fulfil both purposes outlined above.

The monitoring means preferably comprises a conductivity probe operative to determine the conductivity of water flowing through the ducting.

The withdrawal means preferably comprises a discharge valve which, when open, permits water to be discharged from the ducting at a regulated rate, and a timer operative to cause the discharge valve to close when a predetermined period has elapsed after the discharge valve has been opened. In addition there is preferably provided timing means operative to render the blow-down means inoperative for a predetermined period of time after it has been operative to discharge water from the ducting, after which period it again becomes responsive to the monitoring means.

The unit preferably includes a counter which registers the number of occurrences of blow-down and causes operation of the dosing means when a predetermined number of such occurrences has been registered.

The unit preferably affords space in which the additive or additives can be housed.

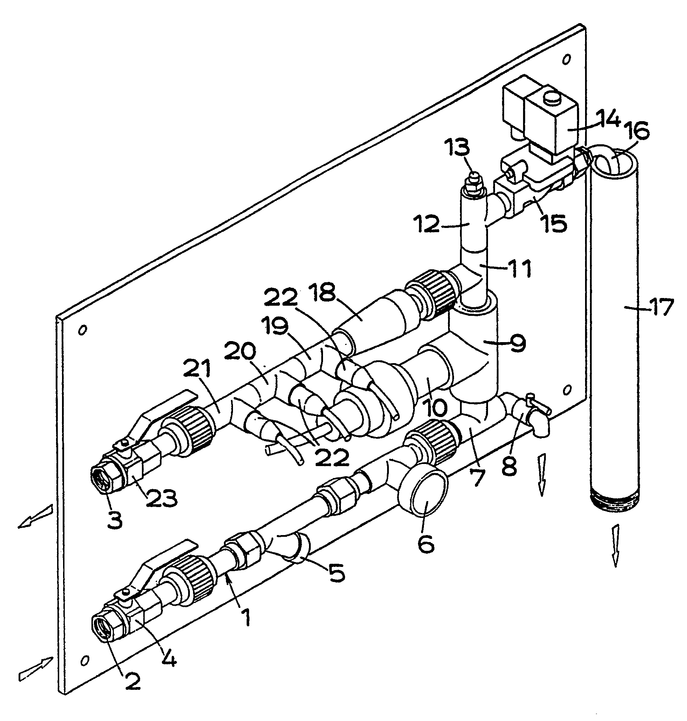

An embodiment of the invention will now be described in more detail with reference to the accompanying drawing, which is an isometric view of ducting and associated components for incorporation in a water-treatment unit in accordance with the present invention.

The unit is intended for use with a recirculatory water system of the kind specified, for example with an evaporative cooling system. It is assumed that such a system includes piping through which water circulates in use. The only modification of the system that must be made to enable the unit to be connected to it is the provision of two T-joints, tappings or similar lateral connections, one being provided at a first location along the piping and the other being provided at a second location along the piping, spaced from the first location. The locations are chosen so that the pressure of water at the first location is significantly greater than the pressure of water at the second location. For example the locations may be on opposite sides of a pump causing water to circulate in the system. Alternatively they may be on opposite sides of a piece of equipment forming part of the system, such as a heat exchanger, which offers resistance to the circulation of water in the system.

The unit incorporates ducting 1 leading from an inlet 2 to an outlet 3. When the unit is installed, the inlet is connected by a short tube to the connection at the first location along the piping and the outlet is connected by a short tube to the connection at the second location. The tubes may be flexible. The arrangement is such that in use part of the water flowing from the one location to the other passes through the ducting 1 (from the inlet to the outlet thereof), the remainder flowing directly through the piping.

The ducting incorporates a plurality of devices. These will be described in the order in which they occur from the inlet 2 to the outlet 3. First there is a manually operable isolation valve 4. Next there is a strainer 5 which incorporates a straining element which can be removed, for cleaning, and replaced at will. After that there is a pressure gauge 6. It is normal in a recirculatory water system for there to be a circulating pump. When the pump is in operation the pressure of the water in the ducting is normally different from the pressure in the ducting when the pump is not in operation. After appropriate calibration, therefore, the pressure gauge 6 can be used to determine whether or not the pump is in operation. Beyond the pressure gauge 6 is a T-piece 7 to the end of which is connected a tap 8 which can be used in draining the ducting or in taking samples of water from the system. The side branch of the T-piece 7 is directed upwards and leads to the operating head 9 of monitoring means. This includes a laterally projecting transparent glass tube 10 into which extends a conductivity probe. Above the operating head 9 are two additional T-pieces, 11 and 12. The upper T-piece, 12, has an air-vent 13 at the top which can be opened if necessary to release air from the ducting. The lateral branch of the T-piece 12 leads to withdrawal means which constitutes part of the blow-down means. The withdrawal means comprises a solenoid-operated discharge valve 14 and a flow regulator 15 and terminates in a downwardly directed discharge tube 16 which opens into a tube 17 of larger diameter and which constitutes a tundish. The lower end of the tundish 17 is connected to a drain. This arrangement ensures that water withdrawn from the system is fed to the drain at a relatively low pressure.

The lateral branch of the lower T-piece 11 is connected to a non-return valve 18. Beyond that are three successive T-pieces 19, 20 and 21 of which the lateral branches are connected to injection fittings 22 connected to supplies of additives. These constitute part of dosing means. Finally the ducting extends through a manually operable isolation valve 23 similar to the valve 4.

The ducting 1 and its associated devices are mounted on a backing plate, as illustrated. The whole assembly is in turn mounted in a cabinet (not shown) which includes a space in which can be stored three different additives. For example there may be two different biocides and a mixture of chemicals serving to reduce corrosion and to reduce any tendency that there may be for scale to form. The mixture may be blended so as to make it suitable for the particular nature of the water used in the system. With soft, acid water the main problem to be overcome is corrosion while with hard, alkaline water the main problem is the formation of unwanted scale.

The cabinet also houses electrical equipment constituting part of and associated with the blow-down means and the dosing means. A control panel at the top of the cabinet carries manually operable controls and also meters enabling the operation of the unit to be monitored. The unit operates in the following manner. Water from the system flows through the ducting 1. As it passes through the ducting it is first strained by the strainer 5. Its conductivity is then measured by the conductivity probe in the operating head 9. If the concentration of dissolved substances in the water is such that the conductivity of the water is below a predetermined value the water proceeds through the outlet 3 and back into the system. If, however, the conductivity reaches that predetermined value, blow-down is initiated by the opening of the solenoid valve 14. This results in water being removed from the ducting 1 and discharged into the tundish 17 at a rate controlled by the adjustment of the flow regulator 15. The valve 14 remains open for a predetermined period with the result that a predetermined volume of water is removed from the system. For example in a typical arrangement 25 gallons (114 litres) of water is removed in 10 minutes. Elsewhere in the system is a top-up tank which can receive water from the mains supply by way of a float-operated valve operative to keep the total volume of liquid water in the system constant. By this means the water removed from the system during blow-down is replaced by water from the mains supply.

After blow-down has been completed the blow-down means is rendered inoperative for a predetermined period of time so as to allow the newly introduced water to mix with the water already in the system and to dilute the dissolved material. The arrangement is then normally such that when the blow-down means is rendered operative again blow-down does not occur at once but is delayed until the concentration of dissolved material in the system has built up again to the predetermined value.

In the unit there is a counter which includes a counting register which stores a number to which one is added on each occasion that blow-down occurs. When the number stored by the register reaches a predetermined operating number the dosing means is brought into operation and causes predetermined quantities of additives to be added to the water in the ducting 1. At the same time the number stored by the counting register is returned to zero. The controls carried by the control panel include means for adjusting the predetermined operating number.

It is envisaged that a unit of the kind described can be transported to site and can readily be set up for use with a recirculatory water system. All that is necessary is for piping of the system to be tapped at two spaced locations and for short lengths of tube to be connected between the tappings and the inlet and outlet of the ducting in the unit. The unit must also be connected to a suitable source of electricity and to a drain. Once the unit is in operation it is envisaged that it will be possible for it to operate without intervention by an operator for periods of up to several months at a time. If desired, warning means such as lamps or bells may be provided and which operate if the quantity of any of the additives falls below a predetermined minimum value. This alerts the operator to replenish the stock of additive concerned.

## Claims

1. A transportable water-treatment unit for use with a recirculatory water system of the kind such that in use water is lost from the system in the form of water vapour, and comprising water ducting (1), dosing means (19,20,21) operative to add to water in the system controlled amounts of material in the form of one or more additives, and withdrawal means (14,15) operative to bring about the removal of water from the system, characterised in that the ducting extends between an inlet (2) and an outlet (3) for connection to spaced locations of the system so that the ducting affords a pathway or pathways for only part of the water flowing from one of said locations to the other, the dosing means is operative to add said material to water in the ducting between the inlet and the outlet, the withdrawal means is operative to bring about the removal of water from the ducting between the inlet and the outlet and constitutes part of blow-down means which also includes monitoring means (9,10) operative to monitor flowing through the ducting between the inlet and the outlet and operative to bring about operation of the withdrawal means when it detects that the concentration of substances dissolved in the water in the ducting exceeds a predetermined value.

2. A transportable water-treatment unit according to claim 1 in which the monitoring means (9, 10) is upstream of a withdrawal point (12) in the ducting from which water is removed during operation of the withdrawal means.

3. A transportable water-treatment unit according to claim 2 in which there is a non-return valve (18) in the ducting downstream of the withdrawal point (12).

4. A transportable water-treatment unit according to any one of the preceding claims in which the dosing means (19, 20, 21) is operative to add material to the water in the ducting downstream of the monitoring means (9, 10).

5. A transportable water-treatment unit according to any one of the preceding claims in which the dosing means (19, 20, 21) is operative to add material to the water in the ducting downstream of the withdrawal means (14, 15).

6. A transportable water-treatment unit according to claim 5 in which there is a non-return valve (18) between the withdrawal means (14, 15) and the location or locations (19, 20, 21) where the material is added by the dosing means.

7. A transportable water-treatment unit according to claims 3 and 6 in which the non-return valve (18) in the ducting downstream of the withdrawal point constitutes the same non-return valve as is between the withdrawal means and said location or locations.

8. A transportable water-treatment unit according to any one of the preceding claims in which the monitoring means (9, 10) comprises a conductivity probe operative to determine the conductivity of water flowing through the ducting.

9. A transportable water-treatment unit according to any one of the preceding claims in which the withdrawal means comprises a discharge valve (14) which, when open, permits water to be discharged from the ducting at a regulated rate, and a timer operative to cause the discharge valve to close when a predetermined period has elapsed after the discharge valve has been opened.

10. A transportable water-treatment unit according to claim 9 in which there is timing means operative to render the blow-down means inoperative for a predetermined period of time after it has been operative to discharge water from the ducting, after which period it again becomes responsive to the monitoring means

11. A transportable water-treatment unit according to any one of the preceding claims in which there is a counter which registers the number of occurrences of blow-down and causes operation of the dosing means when a predetermined number of such occurrences has been registered.

12. A recirculatory water system of the kind such that in use water is lost from the system in the form of water vapour, in combination with a transportable water-treatment unit in accordance with any one of the preceding claims, the inlet and outlet of the ducting being connected to spaced locations of the system.

**Revendications**

1. Unité transportable de traitement de l'eau, destinée à être utilisée avec un système à recirculation d'eau du type tel qu'en fonctionnement, de l'eau est perdue par le système sous la forme de vapeur d'eau, et comprenant une canalisation d'eau (1), des moyens de dosage (19,20,21) agissant de manière à ajouter à l'eau contenue dans le système, des quantités contrôlées d'une substance sous la forme d'un ou de plusieurs additifs, et des moyens de soutirage (14,15) agissant de manière à réaliser l'évacuation de l'eau à partir du système, caractérisée en ce que la canalisation s'étend entre une entrée (2) et une sortie (3) permettant un raccordement à des emplacements espacés du système de sorte que la canalisation établit un ou des trajets pour seulement une partie de l'eau circulant depuis l'un desdits emplacements en direction de l'autre emplacement, les moyens de dosage agissent en ajoutant ladite substance dans l'eau située dans la canalisation entre l'entrée et la sortie, les moyens de soutirage agissent de manière à provoquer l'évacuation d'eau à partir de la canalisation entre l'entrée et la sortie et font partie de moyens de purge qui comprennent également des moyens de contrôle (9,10) agissant de manière à contrôler l'écoulement dans la canalisation entre l'entrée et la sortie et agissant de manière à déclencher le fonctionnement des moyens de soutirage, lorsqu'ils détectent que la concentration de substances dissoutes dans l'eau dans la canalisation dépasse une valeur prédéterminée.

2. Unité transportable de traitement de l'eau selon la revendication 1, dans laquelle les moyens de contrôle (9,10) sont disposés en amont d'un point de soutirage (12) situé dans la canalisation, d'où l'eau est retirée pendant le fonctionnement des moyens de soutirage.

3. Unité transportable de traitement de l'eau selon la revendication 2, dans laquelle une soupape antiretour (18) est montée dans la canalisation en aval du point de soutirage (12).

4. Unité transportable de traitement de l'eau selon l'une quelconque des revendications précédentes, dans laquelle les moyens de dosage (19,20,21) agissent en ajoutant une substance à l'eau dans la canalisation, en aval des moyens de contrôle (9,10).

5. Unité transportable de traitement de l'eau selon l'une quelconque des revendications précédentes, dans laquelle les moyens de dosage (19,20,21) agissent en ajoutant une substance à l'eau dans la canalisation en aval des moyens de soutirage (14,15).

6. Unité transportable de traitement de l'eau selon la revendication 5, dans laquelle il existe une soupape antiretour (18) entre les moyens de soutirage (14,15) et le ou les emplacements (19,20,21), au niveau desquels la substance est ajoutée par les moyens de dosage.

7. Unité transportable de traitement de l'eau selon les revendications 3 et 6, dans laquelle la soupape antiretour (18) située dans la canalisation en aval du point de soutirage est la même soupape antiretour que celle disposée entre les moyens de soutirage et le ou lesdits emplacements.

8. Unité transportable de traitement de l'eau selon l'une quelconque des revendications précédentes, dans laquelle les moyens de contrôle (9,10) comprennent une sonde de conductivité agissant de manière à déterminer la conductivité de l'eau circulant dans la canalisation.

9. Unité transportable de traitement de l'eau selon l'une quelconque des revendications précédentes, dans laquelle les moyens de soutirage comprennent une soupape de refoulement (14) qui, lorsqu'elle est ouverte, permet le refoulement de l'eau à partir de la canalisation, à un débit réglé, et une minuterie agissant de manière à déclencher la fermeture de la soupape de refoulement, lorsqu'un intervalle de temps prédéterminé s'est écoulé après l'ouverture de la soupape de refoulement.

10. Unité transportable de traitement de l'eau selon la revendication 9, dans laquelle il est prévu des moyens formant minuterie agissant de manière à rendre les moyens de purge inopérants pendant un intervalle de temps prédéterminé après qu'ils aient fonctionné pour refouler de l'eau hors de la canalisation, période à la suite de laquelle les moyens de purge deviennent à nouveau sensibles aux moyens de contrôle.

11. Unité transportable de traitement de l'eau selon l'une quelconque des revendications précédentes, dans laquelle il est prévu un compteur qui enregistre le nombre d'exécutions de purge et déclenche le fonctionnement des moyens de dosage, lorsqu'un nombre prédéterminé de telles exécutions a été enregistré.

12. Système de recirculation d'eau du type tel qu'en fonctionnement, de l'eau est perdue par le système sous la forme de vapeur d'eau, en combinaison avec une unité transportable de traitement de l'eau selon l'une quelconque des revendications précédentes, l'entrée et la sortie de la canalisation étant raccordées à des emplacements espacés du système.

**Patentansprüche**

1. Transportables Wasseraufbereitungsgerät für Wassersysteme mit Umwälzung, aus denen im Betrieb Wasser in Form von Wasserdampf verlorengeht, mit einer Leitungsanordnung (1) für das Wasser, mit Dosiereinrichtungen (19,20,21), mittels derer dem Wasser in dem System gesteuerte Stoffmengen in der Form eines oder mehrerer Zusätze hinzufügbar sind, und mit einer Entnahmeeinrichtung (14,15), mittels deren Wasser aus dem System entfernbar ist, dadurch gekennzeichnet, daß sich die Leitungsanordnung zwischen einem Einlaß (2) und einem Auslaß (3) erstreckt und derart an voneinander entfernte Stellen des Systems anschließbar ist, daß die Leitungsanordnung nur für einen Teil des von der einen dieser Stellen zur anderen strömenden Wassers einen Weg oder Wege bietet, wobei die Dosiereinrichtung dem Wasser in der Leitungsanordnung zwischen Einlaß und Auslaß die Stoffe hinzufügt und wobei die Entnahmeeinrichtung Wasser aus der Leitungsanordnung zwischen Einlaß und Auslaß entfernt und Teil einer Ablaßeinrichtung ist, die auch noch einen Monitor (9,10) umfaßt, mittels dessen eine Strömung in der Leitungsanordnung zwischen Einlaß und Auslaß feststellbar und bei der Feststellung, daß die Konzentration von in dem Wasser gelösten Substanzen einen vorbestimmten Wert überschreitet, die Entnahmeeinrichtung betätigbar ist.

2. Transportables Wasseraufbereitungsgerät nach Anspruch 1, in welchem der Monitor (9,10) stromaufwärts eines Entnahmepunktes (12) in der Leitungsanordnung angeordnet ist, von welchem Wasser während des Betriebs der Entnahmeeinrichtung entfernt wird.

3. Transportables Wasseraufbereitungsgerät nach Anspruch 2, bei welchem in der Leitungsanordnung stromabwärts des Entnahmepunktes (12) ein Rückschlagventil (18) angeordnet ist.

4. Transportables Wasseraufbereitungsgerät nach einem der der vorangehenden Ansprüche, in welchem die Dosiereinrichtung (19,20,21) dem Wasser in der Leitungsanordnung Stoffe stromabwärts des Monitors (9,10) hinzufügt.

5. Transportables Wasseraufbereitungsgerät nach einem der vorangehenden Ansprüche, bei welchem die Dosiereinrichtung (19,20,21) dem Wasser in der Leitungsanordnung Stoffe stromabwärts der Entnahmeeinrichtung (14,15) hinzufügt.

6. Transportables Wasseraufbereitungsgerät nach Anspruch 5, bei welchem ein Rückschlagventil (18) zwischen der Entnahmeeinrichtung (15) und der Stelle oder den Stellen (19,20,21) angeordnet ist, an denen durch die Dosiereinrichtung Stoffe hinzugefügt werden.

7. Transportables Wasseraufbereitungsgerät nach den Ansprüchen 3 und 6, in welchem das Rückschlagventil (18) in der Leitungsanordnung stromabwärts des Entnahmepunkts das gleiche Rückschlagventil darstellt, welches zwischen der Entnahmeeinrichtung und der besagten Stelle oder den besagten Stellen angeordnet ist.

8. Transportables Wasseraufbereitungsgerät nach einem der vorangehenden Ansprüche, bei welchem der Monitor (9,10) eine Leitfähigkeitssonde umfaßt, mittels deren die Leitfähigkeit des durch die Leitungsanordnung strömenden Wassers bestimmbar ist.

9. Transportables Wasseraufbereitunsgerät nach einem der vorangehenden Ansprüche, bei welchem die Entnahmeeinrichtung ein Ablaßventil (14), mittels welchem in der geöffneten Stellung Wasser aus der Leitungsanordnung mit einem geregelten Durchsatz abgelassen werden kann, und einen Zeitschalter umfaßt, mittels dessen das Ablaßventil nach Ablauf einer vorbestimmten Zeitdauer nach Öffnung des Ablaßventils schließbar ist.

10. Transportables Wasseraufbereitungsgerät nach Anspruch 9, bei welchem eine Zeitschalteinrichtung vorgesehen ist, mittels welcher die Ablaßeinrichtung für eine vorbestimmte Zeit nach der Öffnung zum Ablaß von Wasser aus der Leitungsanordnung außer Betrieb setzbar ist, wobei die Ablaßeinrichtung nach Ablauf der Zeitdauer wieder auf den Monitor anspricht.

11. Transportables Wasseraufbereitungsgerät nach einem der vorangehenden Ansprüche, bei welchem ein Zähler vorgesehen ist, der die Anzahl der Ablaßvorgänge registriert und die Dosiereinrichtung in Betrieb setzt, wenn eine vorbestimmte Anzahl von solchen Vorgängen registriert worden ist.

12. Wassersystem mit Umwälzung, bei welchem Wasser aus dem System in Form von Wasserdampf verlorengeht, in Kombination mit dem transportablen Wasseraufbereitungsgerät nach einem der vorangehenden Ansprüche, wobei Einlaß und Auslaß der Leitungsanordnung mit voneinander entfernten Stellen des Systems verbunden sind.